# EUROPEAN PATENT APPLICATION

(11) **EP 4 621 919 A1**
(43) Date of publication of application: **24.09.2025**
(21) Application number: 23907818.1
(22) Date of filing: 21.12.2023
(51) Int. Cl.: H01M 10/0585, H01M 10/04, H01M 50/595, H01M 50/536

(54) **ELECTRODE ASSEMBLY AND LITHIUM SECONDARY BATTERY COMPRISING SAME**

(30) Priority: 23.12.2022 KR 20220183641
(71) Applicant: LG Energy Solution, Ltd., Seoul 07335 (KR)
(72) Inventor: KIM, Nam Hun, Daejeon 34122 (KR); SONG, Jae Eun, Daejeon 34122 (KR); KIM, Jung Heub, Daejeon 34122 (KR); KIM, Chang Ho, Daejeon 34122 (KR)
(74) Representative: Plasseraud IP
(86) International application number: PCT/KR2023/021283
(87) International publication number: WO 2024/136535

(57) **Abstract**

The present invention relates to an electrode assembly a nd a lithium secondary battery including the same. The electro de assembly includes an electrode stack including a positive electrode including a positive electrode active material layer, a negative electrode including a negative electrode active material layer, and a separator interposed between the positive electrode and the negative electrode; and at least one fixing member that fixes the electrode stack by surrounding the electrode stack in the full width direction, wherein the positive electrode includes a positive electrode tapering part in which the thickness of the positive electrode active material layer decreases, and the at least one fixing member is disposed to overlap a region corresponding to the positive electrode tapering part.

## Description

### TECHNICAL FIELD

This application claims the benefit of Korean Patent Application No. 10-2022-0183641, filed on December 23, 2022, the disclosure of which is incorporated herein in its entirety by reference.

The present invention relates to an electrode assembly and a lithium secondary battery including the same, and more particularly, to an electrode assembly developed to suppress lithium plating in an electrode tapering part, and a lithium secondary battery including the same.

### BACKGROUND ART

With the development of technologies such as electric vehicles, Energy Storage System (ESS), portable electronic devices, and the like, the demand for lithium secondary batteries as an energy source is rapidly increasing.

The lithium secondary battery may be classified into a pouch type, a can type, and the like according to a material of a case accommodating the electrode assembly, and the electrode assembly may be classified into a winding type (jelly-roll type), a stacked type (stacking type), a stacked and lamination type, a stacking and folding type, or the like according to a manufacturing method and form.

Among these, the pouch-type secondary battery is manufactured by forming a cup part by performing press processing on a flexible pouch film laminate, accommodating an electrode assembly in the cup part, injecting an electrolyte, and then sealing the sealing part, and the can-type secondary battery is manufactured by accommodating an electrode assembly in a can made of a metal material, injecting an electrolyte, and then assembling a top cap on the can to seal the can.

The electrode assembly has a structure including a positive electrode, a negative electrode, and a separator interposed between the positive electrode and the negative electrode, and the positive electrode and the negative electrode are respectively manufactured by coating a current collector with an electrode slurry to form an active material layer, followed by drying and rolling. When an electrode is manufactured by coating with the electrode slurry, an electrode a tapering part in which the thickness of the active material layer gradually decreases is formed at the end of the active material layer. In the region in which the electrode tapering part is formed, the distance between the positive electrode active material layer and the negative electrode active material layer increases, and the adhesion to the separator decreases, so that Li-plating is likely to occur.

In addition, in the lithium secondary battery, as the charge and discharge are repeated, the electrolyte is consumed and the amount of the electrolyte decreases, and when the amount of the electrolyte in the battery decreases, the electrolyte does not reach the end of the electrode, and thus the electrolyte impregnability is deteriorated, and thus the mobility of lithium ions is deteriorated, and Li-plating may occur.

Meanwhile, as a lithium secondary battery is recently applied as a power source of an electric vehicle, a lithium secondary battery having a relatively long overall length compared to a full width (hereinafter, referred to as a "long cell" for convenience) has been developed in consideration of a battery accommodation space and a location. The lithium secondary battery having such a long cell structure has the advantages of high capacity and excellent space efficiency compared to the conventional lithium secondary battery, but there is a limitation in that as the charging and discharging are repeated, the pressing force is reduced at the end of the electrode assembly close to an electrode tab, and thus the adhesion between the separator and the electrode is reduced, thereby further increasing the Li-plating.

Therefore, there is a need to develop an electrode assembly capable of preventing the Li-plating in the electrode tapering part and a lithium secondary battery including the same.

### DISCLOSURE OF THE INVENTION

### TECHNICAL PROBLEM

To solve the above limitations, an aspect of the present invention provides an electrode assembly developed to improve the adhesion between an electrode and a separator by disposing a fixing member to overlap a positive electrode tapering part, and to suppress the occurrence of Li-plating phenomenon by maintaining a pressing force at the end of the electrode assembly.

Another aspect of the present invention provides a lithium secondary battery capable of preventing the deterioration in battery performance and safety due to lithium precipitation by including the electrode assembly.

### TECHNICAL SOLUTION

According to an aspect of the present invention, there is provided an electrode assembly including: an electrode stack including a positive electrode including a positive electrode active material layer, a negative electrode including a negative electrode active material layer, and a separator interposed between the positive electrode and the negative electrode; and at least one fixing member that fixes the electrode stack by surrounding the electrode stack in the full width direction. In this case, the positive electrode includes a positive electrode tapering part in which a thickness of the positive electrode active material layer decreases, and the at least one fixing member is disposed to overlap a region corresponding to the positive electrode tapering part.

Meanwhile, the negative electrode may include a negative electrode tapering part in which a thickness of the negative electrode active material layer decreases, and the at least one fixing member may be disposed to overlap at least a portion of a region corresponding to the negative electrode tapering part.

Meanwhile, in the electrode stack, the ratio (L/W) of the total length (L) to the full width (W) may be at least 3, and preferably, the ratio of the total length (L) to the full width (W) may be 3 to 7.

The electrode assembly according to the present invention may include 2 to 10 fixing members, wherein the fixing members may be disposed at positions in bilateral symmetry in the total length direction, and preferably, the fixing members may be disposed to be spaced apart at an equal interval.

Each of the at least one fixing member may include a porous structure, and specifically, may be a tape in which an adhesive layer is formed on one surface of a substrate having a porous structure.

Each of the at least one fixing member may have a width of 10 mm to 50 mm.

According to another aspect of the present invention, there is provided a lithium secondary battery including the electrode assembly according to the present invention, an electrolyte, and a battery case in which the electrode assembly and the electrolyte are accommodated. In this case, the battery case may be a pouch-type battery case.

### ADVANTAGEOUS EFFECTS

In the electrode assembly according to the present invention, the fixing member is disposed to overlap the region in which the positive electrode tapering part is formed, thereby firmly maintaining the close contact between the electrode tapering part and the separator, and accordingly, it is possible to minimize the degradation of lithium mobility due to poor interfacial adhesion between the electrode tapering part and the separator, thereby preventing lithium from being precipitated from the electrode tapering part.

In addition, when the fixing member is disposed in a long cell having the total length longer than the full width as in the present invention, it is possible to suppress a decrease in the pressing force of the end of the electrode assembly due to the progress of charging and discharging, thereby minimizing a decrease in the electrolyte solution in the electrode tapering part, thereby preventing the deterioration of battery performance.

Therefore, when the electrode assembly according to the present invention is applied, excellent performance and safety may be realized until the end of the lifetime of the lithium secondary battery.

### BRIEF DESCRIPTION OF THE DRAWINGS

FIG. 1 is a top view of an electrode assembly according to an embodiment of the present invention;
FIG. 2 is a cross-sectional view of an electrode stack according to an embodiment of the present invention;
FIG. 3 is a photograph showing a post-cycle state of a lithium secondary battery including an electrode assembly manufactured by Example; and
FIG. 4 is a photograph showing a post-cycle state of a lithium secondary battery including an electrode assembly manufactured by Comparative Example.

### BEST MODE FOR CARRYING OUT THE INVENTION

Hereinafter, the present invention will be described in detail.

As a result of a significant amount of repeatedly conducted researches for developing a lithium secondary battery capable of achieving excellent performance and safety until the end of the lifetime of the battery, the present inventors have found that the electrode stack is fixed with a fixing member when the electrode assembly is formed, and the fixing member is disposed to overlap the region of the positive electrode tapering part, thereby not only improving the interfacial adhesion between the electrode tapering part and the separator, but also maintaining a relatively uniform pressing force up to the end of the electrode assembly even when charging and discharging are repeated, thereby minimizing the deterioration of the battery performance until the end of the lifetime of the battery, and achieving excellent safety by suppressing ignition and/or explosion due to the Li-plating, thereby completing the present invention.

Specifically, the electrode assembly according to the present invention includes: an electrode stack including a positive electrode, a negative electrode, and a separator; and at least one fixing member that fixes the electrode stack by surrounding the outer surface of the electrode stack in the full width direction, wherein the at least one fixing member is disposed to overlap a region corresponding to a positive electrode tapering part.

When the fixing member is disposed to overlap the region of the positive electrode tapering part as described above, the distance between the electrode tapering part and the separator is maintained by the fixing member, and even if the charging and discharging are repeated to cause a volume change of the positive electrode active material layer and/or the negative electrode active material layer, the fixing member prevents the distance between the electrode tapering part and the separator from increasing. Accordingly, even if charging and discharging are repeated, the interfacial adhesion between the separator and the electrode and the electrolyte solution impregnability can be maintained at the end of the electrode assembly, thereby suppressing the occurrence of Li-plating due to the deterioration in lithium mobility.

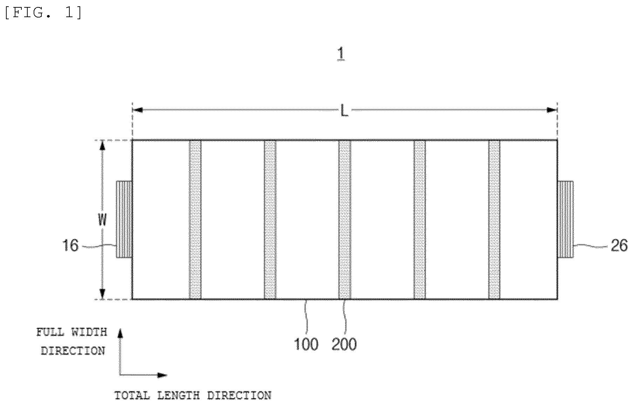

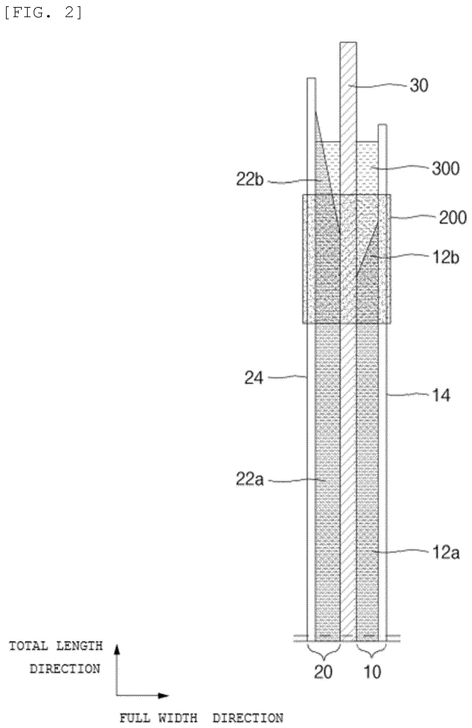

FIG. 1 shows a top view of an electrode assembly according to an embodiment of the present invention, and FIG. 2 shows a cross-sectional view of an electrode stack according to the present invention. Hereinafter, the present invention will be described in more detail with reference to the drawings. However, the following drawings are only examples for describing the present invention, and the scope of the present invention is not limited to those described in the drawings, and various modifications are possible within the scope of the present invention without impairing the purpose and the spirit of the present invention.

As shown in FIG. 1, according to the present invention, an electrode assembly 1 includes an electrode stack 100 and at least one fixing member 200 that fixes the electrode stack 100 by surrounding the electrode stack 100 in the full width direction.

Referring to FIG. 2, the electrode stack 100 includes a positive electrode 10 including positive electrode active material layers 12a and 12b, a negative electrode 20 including a negative active material layers 22a and 22b, and a separator 30 interposed between the positive electrode 10 and the negative electrode 20. The electrode stack 100 may be a stacked-type electrode stack formed by cutting a positive electrode, a separator, and a negative electrode to a predetermined size and then stacking them.

The positive electrode 10 may have, for example, a structure in which positive electrode active material layers 12a and 12b are formed on one surface or both surfaces of the positive electrode current collector 14, and the positive electrode active material layer includes a positive electrode central part 12a in which the thickness of the positive electrode active material layer is maintained relatively constant and a positive electrode tapering part 12b in which the thickness of the positive electrode active material layer decreases. In addition, the positive electrode 10 includes a positive electrode tab 16 for electrical connection with an external power source.

The positive electrode 10 of the lithium secondary battery is manufactured by coating one surface or both surfaces of the positive electrode current collector 14 with a positive electrode slurry prepared by dispersing a positive electrode active material, a conductive agent, and a binder in a solvent such as dimethyl sulfoxide (DMSO), isopropyl alcohol, N-methylpyrrolidone (NMP), acetone, or water, removing the solvent of the positive electrode slurry through a drying process, and then rolling the positive electrode current collector 14. When the positive electrode active material layer is formed by a wet coating manner as above, the amount of the positive electrode slurry coated at the end of the positive electrode active material layer is reduced, thereby forming the positive electrode tapering part 12b.

Meanwhile, as the positive electrode current collector 14, various positive electrode current collectors used in the art may be used. For example, stainless steel, aluminum, nickel, titanium, fired carbon, or aluminum or stainless steel that is surface-treated with one of carbon, nickel, titanium, silver, or the like may be used as the positive electrode current collector. The positive electrode current collector may typically have a thickness of 3 µm to 500 µm, and microscopic irregularities may be formed on the surface of the positive electrode current collector to increase the adhesion of the positive electrode active material. The positive electrode current collector may be used in various shapes, for example, a film, a sheet, a foil, a net, a porous body, a foam body, a non-woven fabric body, and the like.

Meanwhile, the positive electrode active material layers 12a and 12b may include a positive electrode active material, a conductive agent, and a binder.

The positive electrode active material is a compound capable of reversible intercalation and deintercalation of lithium, and various positive electrode active materials used in the art may be used, and the type thereof is not particularly limited. For example, as the positive electrode active material, a lithium iron phosphate-based oxide (*e.g*., LiFe₁₋ₓMₓPO₄, 0≤x<1), a lithium-manganese-based oxide (e.g., LiMnO₂, LiMn₂O₄, *etc.*), a lithium-cobalt-based oxide (*e.g.*, LiCoO₂, *etc.*), a lithium-nickel-manganese-based oxide (*e.g*., LiNi_{1-Y}Mn_{Y}O₂ (0<Y<1), LiMn_{2-z}Ni_{z}O₄ (0<Z<2)), a lithium-nickel-cobalt-based oxide (*e.g.*, LiNi_{1-Y1}Co_{Y1}O₂ (0<Y1<1)), a lithium-manganese-cobalt-based oxide (*e.g.*, LiCo_{1-Y2}Mn_{Y2}O₂ (0<Y2<1), LiMn_{2-z1}Co_{z1}O₄ (0<Z1<2)), a lithium-nickel-manganese-cobalt-based oxide (*e.g*., Li(Niₚ₁Co_{q1}Mnᵣ₁)O₂ (0<p1<1, 0<q1<1, 0<r1< 1, and p1+q1+r1=1) or Li(Niₚ₂Co_{q2}Mnᵣ₂)O₄ (0<p2<2, 0<q2<2, 0< r2<2, and p2+q2+r2=2)) or a lithium-nickel-cobalt-transition metal (M) oxide (*e.g.*, Li(Niₚ₃Co_{q3}Mnᵣ₃Mₛ₃)O₂ (where, M is selected from the group consisting of Al, Fe, V, Cr, Ti, Ta, Mg, and Mo, p3, q3, r3, and s3 are atomic fractions of independent elements, respectively, and 0<p3<1, 0<q3<1, 0<r3<1, 0<s3 <1, and p2+q2+r3+s2=1) or a combination thereof may be used.

The positive electrode active material may be included in an amount of 80 wt% to 99 wt%, preferably 85 wt% to 99 wt%, and more preferably 90 wt% to 99 wt% with respect to the total weight of the positive electrode active material layer.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the positive electrode active material layer.

The binder serves to improve binding between positive electrode active material particles and the adhesion between the positive electrode active material and the positive electrode current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the positive electrode active material layer.

Next, the negative electrode 20 may have a structure in which negative active material layers 22a and 22b are formed on one surface or both surfaces of the negative electrode current collector 24, and the negative active material layer includes a negative electrode central part 22a in which the thickness of the negative active material layer is maintained relatively constant and a negative electrode tapering part 22b in which the thickness of the negative active material layer decreases. In addition, the negative electrode 20 includes a negative electrode tab 26 for electrical connection with an external power source.

The negative electrode 20 of the lithium secondary battery is manufactured by coating one surface or both surfaces of the negative electrode current collector 24 with a negative electrode slurry prepared by dispersing a negative electrode active material, a conductive agent, and a binder in a solvent such as dimethyl sulfoxide (DMSO), isopropyl alcohol, N-methylpyrrolidone (NMP), acetone, or water, removing the solvent of the negative electrode slurry through a drying process, and then rolling the negative electrode current collector 14. When the negative electrode active material layer is formed by a wet coating manner as above, the amount of the negative electrode slurry coated at the end of the negative electrode active material layer is reduced, thereby forming the negative electrode tapering part 22b. Although it varies with the negative electrode loading amount and coating conditions, the negative electrode tapering part 22b is generally formed longer than the positive electrode tapering part 12b.

As the negative electrode current collector, negative electrode current collectors generally used in the art may be used, and for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode current collector may typically have a thickness of 3 µm to 500 µm, and, similar to the positive electrode current collector, microscopic irregularities may be formed on the surface of the current collector to improve the adhesion of the negative electrode active material. For example, the negative electrode current collector may be used in various shapes such as a film, a sheet, a foil, a net, a porous body, a foam body, and a non-woven fabric body.

Meanwhile, the negative active material layer may include a negative active material, a conductive agent, and a binder.

As the negative active material, compounds capable of reversible intercalation and deintercalation of lithium generally used in the art may be used, and a type thereof is not particularly limited. Specific examples of the negative electrode active material may include a carbonaceous material such as artificial graphite, natural graphite, graphitized carbon fiber, or amorphous carbon; a silicon-based material such as Si, a Si-Me alloy (where, Me is at least one selected from the group consisting of Al, Sn, Mg, Cu, Fe, Pb, Zn, Mn, Cr, Ti, and Ni), SiOy (where, 0<y<2), or a Si-C composite; a lithium metal thin film; a metal material alloyable with lithium, such as Sn or Al; and any one thereof or a mixture of two or more thereof may be used.

The negative active material may be included in an amount of 80 wt% to 99 wt%, preferably 85 wt% to 99 wt%, and more preferably 90 wt% to 99 wt% with respect to the total weight of the negative active material layer.

The conductive agent is used to provide conductivity to the negative electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the negative electrode active material layer.

The binder serves to improve the adhesion between the negative electrode active material particles and the adhesion between the negative electrode active material and the negative electrode collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the negative electrode active material layer.

Next, the separator 30 separates the negative electrode and the positive electrode and provides a movement path of lithium ions, wherein any separator may be used as the separator without particular limitation as long as it is typically used in a lithium secondary battery. Specifically a porous polymer film, for example, a porous polymer film prepared from a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous non-woven fabric, for example, a non-woven fabric formed of high melting point glass fibers or polyethylene terephthalate fibers may be used. Furthermore, a coated separator including a ceramic component or a polymer material may be used to secure heat resistance or mechanical strength.

According to the present invention, when the electrode tapering part, in which the thickness of the active material layer is reduced, is included at the ends of the positive electrode and the negative electrode, the separator and the electrode active material layer are not adhered to the electrode tapering part, so that the lithium mobility is lowered compared to the electrode central part, and as a result, there occurs the Li-plating phenomenon in which lithium ions generated in the positive electrode are not inserted into the negative electrode and are precipitated from the surface of the negative electrode during the discharging process. In addition, when the total length of the electrode assembly is increased, the pressing force at the end of the electrode assembly decreases, and thus the adhesion with the separator at the end of the electrode assembly further decreases, and when the electrolyte is consumed due to repeated charging and discharging, the electrolyte does not come into contact with the electrode tapering part, thereby accelerating the battery performance deterioration and the Li-plating.

In order to solve such a limitation, the fixing member 200 is disposed to overlap the positive electrode tapering part 12b, thereby improving the adhesion between the positive electrode tapering part 12b and the separator 30. When the fixing member 200 is disposed according to the present invention, a decrease in lithium mobility due to a defect in interfacial adhesion between the electrode tapering part and the separator may be minimized, and a decrease in pressing force of the end of the electrode assembly due to the progress of charging and discharging may be suppressed, thereby minimizing a phenomenon in which the electrolyte solution is reduced in the electrode tapering part.

More preferably, the fixing member 200 may be disposed to overlap at least a portion of a region corresponding to the negative electrode tapering part 22b. When the fixing member 200 is disposed to overlap at least a portion of the negative electrode tapering part, both the interfacial adhesion between the positive electrode and the separator and the interfacial adhesion between the negative electrode and the separator are increased, so that the effect of suppressing the Li-plating and performance deterioration may be exhibited further excellent.

Meanwhile, in the electrode stack, the ratio (L/W) of the total length (L) to the full width (W) may be at least 3, preferably 3 to 7, and more preferably 4 to 6. In this case, the full width and the total length respectively mean the length in the width direction and the length in the length direction of the component having the largest dimension among the positive electrode, the negative electrode, and the separator constituting the electrode stack. When the ratio of the total length to the full width of the electrode stack is at least 3, there is an advantage in that high capacity may be achieved. However, when the total length is longer than the full width, the cell pressing force is weakened at the end in the total length direction, and when the electrolyte is consumed due to charging and discharging, there may occur a limitation in that the electrolyte impregnability is deteriorated at the end. However, when the fixing member is disposed to overlap the positive electrode tapering part as in the present invention, the pressing force is maintained relatively uniformly up to the end of the electrode stack, and thus this limitation may be solved.

Specifically, the electrode stack according to the present invention may have a full width of 50 mm to 200 mm, preferably 70 mm to 200 mm, and more preferably 70 mm to 150 mm, and a total length of 200 mm to 1,000 mm, preferably 300 mm to 800 mm, and more preferably 400 mm to 600 mm.

Meanwhile, the fixing member 200 may include a porous structure. When the fixing member includes a porous structure, the electrolyte may pass through the fixing member and the electrode stack may be impregnated with the electrolyte, thereby preventing the electrolyte impregnability of the electrode stack from deteriorating due to the fixing member. Specifically, the fixing member 200 may be a finishing tape in which an adhesive layer is formed on one surface of a substrate layer made of a polymer material having a porous structure, but is not limited thereto. The polymer material may be, for example, polyethylene terephthalate (PET), polyvinyl chloride (PVC), polyethylene (PE), or the like, but is not limited thereto.

The fixing member 200 preferably has a width of about 10 mm to 50 mm or about 20 mm to 40 mm in the full width direction of the electrode stack. When the width of the fixing member 200 is too wide, the outer surface area of the electrode stack 100 covered by the fixing member 200 increases, and the contact area with the electrolyte decreases, and thus the electrolyte impregnability may be deteriorated, and when the width is too small, the effect of fixing the electrode stack may be deteriorated.

Meanwhile, the electrode assembly according to the present invention may include 2 to 10 fixing members, preferably 2 to 8 fixing members, and more preferably 3 to 7 fixing members. In this case, the fixing members may be disposed at positions in bilateral symmetry in the total length direction, and preferably, the fixing members may be spaced apart at an equal interval. When a plurality of fixing members are provided and disposed as described above, it is possible to firmly fix the electrode stack having a long-cell structure with a long total length, and it is possible to prevent a change in pressing force according to the position of the electrode stack.

Next, a lithium secondary battery according to the present invention will be described.

The lithium secondary battery according to the present invention includes: the electrode assembly according to the present invention; an electrolyte; and a battery case in which the electrode assembly and the electrolyte are accommodated. Since the electrode assembly has been described above, only the other components will be described below.

The lithium secondary battery according to the present invention may be manufactured by a method of accommodating an electrode assembly in a battery case, injecting an electrolyte thereto, and sealing the battery case.

In this case, the battery case may be, for example, a pouch-type battery case.

The pouch-type battery case may include a barrier layer, a base layer disposed on one surface of the barrier layer, and a sealant layer disposed on the other surface of the barrier layer, and may include at least one cup part recessed in one direction.

Specifically, the pouch-type battery case has flexibility, and may be manufactured by a method for forming a cup portion indented in one direction by inserting a pouch film stack in which a base layer, a barrier layer, and a sealant layer are sequentially stacked into a press forming apparatus, and stretching the pouch film stack by applying pressure to a partial region of the pouch film stack with a punch.

In this case, the base layer is disposed on the outermost layer of the pouch-type battery case to protect and electrically insulate the electrode assembly from external impact.

The base layer may be made of a polymer material, for example, at least one polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon.

The base layer may have a single-layered structure or a multi-layered structure in which different polymer films are stacked. When the base layer has a multi-layered structure, an adhesive layer may be interposed between the polymer films.

For example, the base layer may have a stacked structure of a polyethylene terephthalate (PET) film and a nylon film. In this case, it is preferable that the nylon film is disposed on the barrier layer side, that is, the inside, and the polyethylene terephthalate film is disposed on the surface side of the pouch.

Polyethylene terephthalate has excellent durability and electrical insulation, and thus, when the PET film is disposed on the surface side, excellent durability and insulation are exhibited. However, in the case of the PET film, since the adhesion to the aluminum alloy thin film constituting the barrier layer is weak and the stretching behavior is different, when the PET film is disposed on the barrier layer side, peeling of the base layer and the barrier layer may occur during the molding process, and since the barrier layer is not uniformly stretched, there may occur a limitation in that the formability is deteriorated. On the other hand, since the nylon film has a similar stretching behavior to the aluminum alloy thin film constituting the barrier layer, when the nylon film is disposed between the polyethylene terephthalate and the barrier layer, it is possible to obtain an effect of improving the formability.

The polyethylene terephthalate film may have a thickness of 5 µm to 20 µm, preferably 5 µm to 15 µm, and more preferably 7 µm to 15 µm, and the nylon film may have a thickness of 10 µm to 40 µm, preferably 10 µm to 35 µm, and more preferably 15 µm to 25 µm. When the thicknesses of the polyethylene terephthalate film and the nylon film satisfy the above range, the formability and the rigidity after forming are excellent.

Meanwhile, the base layer may have a total thickness of 10 µm to 60 µm, preferably 20 µm to 50 µm, and more preferably 30 µm to 50 µm. When the base layer has a multi-layered structure, the thickness is a thickness including an adhesive layer. When the base layer satisfies the above range, durability, insulation, and formability are excellent. If the base layer is too thin, the durability may be deteriorated, damage to the base layer may occur during the forming process, if it is too thick, the formability may be deteriorated, the overall thickness of the pouch may be increased, and the battery accommodation space may be reduced, thereby reducing energy density.

The barrier layer is for securing the mechanical strength of the pouch-type battery case, blocking the entry of gas, moisture, or the like outside the secondary battery, and preventing the leakage of the electrolyte.

The barrier layer may be made of a metal material, for example, an aluminum alloy thin film. In this case, the aluminum alloy thin film may include aluminum, and a metal element in addition to the aluminum, for example, one or two or more selected from the group consisting of iron (Fe), copper (Cu), chromium (Cr), manganese (Mn), nickel (Ni), magnesium (Mg), silicon (Si), and zinc (Zn).

The barrier layer may have a thickness of 40 µm to 100 µm, more preferably 50 µm to 80 µm, and more preferably 60 µm to 80 µm. When the thickness of the barrier layer satisfies the above range, the formability is improved to increase the molding depth of the cup portion, or the crack and/or pinhole generation is less even when the two cups are molded, thereby improving resistance to external stress after molding.

The sealant layer is attached through thermal compression to seal the pouch-type battery case, and is located on the inner layer of the battery case.

Since the sealant layer is a surface which is brought into contact with the electrolyte and the electrode assembly after the pouch is molded, the sealant layer should have insulation and corrosion resistance, and since the inside thereof should be completely sealed to block material movement between the inside and the outside, the sealant layer should have high sealing properties.

The sealant layer may be made of a polymer material, for example, at least one selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon, and among these, it is particularly preferable that the sealant layer includes polypropylene (PP) having excellent mechanical properties such as tensile strength, rigidity, surface hardness, abrasion resistance, and heat resistance, and excellent chemical properties such as corrosion resistance.

More specifically, the sealant layer may include polypropylene, cast polypropylene (CPP), acid modified polypropylene, a polypropylene-butylene-ethylene copolymer, or a combination thereof.

The sealant layer may have a single-layered structure, or may have a multi-layered structure including two or more layers made of different polymer materials.

The sealant layer may have a total thickness of 60 µm to 100 µm, preferably 60 µm to 90 µm, and more preferably 70 µm to 90 µm. If the sealant layer is too thin, sealing durability and insulation may be deteriorated, and if it is too thick, flexuosity may be deteriorated and the total thickness of the pouch film stack may increase, resulting in a decrease in energy density relative to volume.

Next, the electrolyte is for moving lithium ions generated by an electrochemical reaction of the electrode during charging and discharging of the secondary battery, and various electrolytes for a lithium secondary battery known in the art may be used, and a type thereof is not particularly limited.

For example, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt in a concentration range of 0.1 M to 5.0 M, preferably, 0.1 M to 3.0 M. When the concentration of the lithium salt is included within the above range, the electrolyte may have suitable conductivity and viscosity, thereby exhibiting excellent performance, and lithium ions may effectively move.

In order to improve lifetime characteristics of the battery, suppress the reduction in battery capacity, and improve discharge capacity of the battery, additives may be additionally included in the electrolyte in addition to the above electrolyte components.

### MODE FOR CARRYING OUT THE INVENTION

Hereinafter, the present invention will be described in more detail through specific examples.

### Example

A positive electrode having a size of 70 mm×500 mm, a negative electrode having a size of 75 mm×505 mm, and a separator having a size of 80 mm×510 mm were prepared, and the positive electrode/separator/negative electrode were sequentially stacked to form an electrode stack.

At this time, the positive electrode was prepared by coating an aluminum current collector having a length of 500 mm with a positive electrode slurry so that the total length of the positive electrode active material layer became 490 mm, and then drying and rolling the current collector, and a positive electrode tapering part having a length of 8 mm was formed at both ends of the positive electrode active material layer.

In addition, the negative electrode was prepared by coating a copper current collector having a length of 505 mm with a negative electrode slurry so that the total length of the negative electrode active material layer became 495 mm, and then drying and rolling the current collector, and a negative electrode tapering part having a length of 10 mm was formed at both ends of the negative electrode active material layer.

Next, five fixing members were wound on the outer surface of the electrode stack in the full width direction to manufacture an electrode assembly. At this time, the fixing members disposed at both ends of the electrode stack are disposed to be located at 5 mm from the end of the positive electrode, and the distances between the fixing members are disposed to be equal intervals. As the fixing member, a finishing tape (0.022T, PET, Daehyun ST, ST-5595DG (HF)) having a width of 30 mm was used.

### Comparative Example

An electrode assembly was manufactured in the same manner as in Example, except that the fixing member was disposed to be located at 30 mm from the end of the positive electrode.

**Experimental Example**

The electrode assemblies prepared in Example and Comparative Example were each accommodated in a pouch-type battery case in which nylon/polyethylene terephthalate/Al alloy thin film/polypropylene were sequentially stacked, and a cup part is molded, an electrolyte was injected thereto, and then the battery case was sealed to manufacture a lithium secondary battery.

Then, the manufactured lithium secondary battery was charged up to 4.22 V at 0.33 C, and discharged to 2.5 V discharged at 0.33 C, which was set as one cycle, and 800 cycles of charging and discharging were repeated, and then the electrode stack was separated to visually confirm whether the Li-plating occurred.

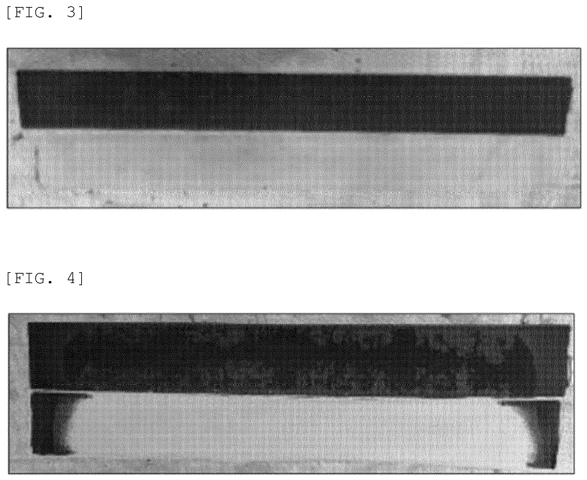

FIG. 3 shows a photograph showing a state after 800 cycles of the lithium secondary battery using the electrode assembly of Example, and FIG. 4 shows a photograph showing a state after 800 cycles of the lithium secondary battery using the electrode assembly of Comparative Example. Referring to FIGS. 3 and 4, it may be seen that the Li-plating did not occur in the lithium secondary battery using the electrode assembly of Example, but the Li-plating did occur in the lithium secondary battery using the electrode assembly of Comparative Example.

### [Description of the Symbols]

- 1:: Electrode Assembly
- 10:: Positive Electrode
- 20:: Negative Electrode
- 30:: Separator
- 100:: Electrode Stack
- 200:: Fixing Member
- 300:: Electrolyte

## Claims

1. An electrode assembly comprising:
an electrode stack comprising a positive electrode comprising a positive electrode active material layer, a negative electrode comprising a negative electrode active material layer, and a separator interposed between the positive electrode and the negative electrode; and
at least one fixing member configured to fix the electrode stack by surrounding the electrode stack in the full width direction,
wherein the positive electrode comprises a positive electrode tapering part in which the thickness of the positive electrode active material layer decreases, and
the at least one fixing member is disposed to overlap a region corresponding to the positive electrode tapering part.

2. The electrode assembly of claim 1, wherein the negative electrode comprises a negative electrode tapering part in which the thickness of the negative electrode active material layer decreases.

3. The electrode assembly of claim 2, wherein the at least one fixing member is disposed to overlap at least a portion of the region corresponding to the negative electrode tapering part.

4. The electrode assembly of claim 1, wherein the electrode stack has a ratio (L/W) of a total length (L) to a full width (W) of at least 3.

5. The electrode assembly of claim 1, wherein the electrode stack has a ratio (L/W) of a total length (L) to a full width (W) of 3 to 7.

6. The electrode assembly of claim 1, wherein the electrode assembly comprises 2 to 10 fixing members, and
the fixing members are disposed at positions in bilateral symmetry in the total length direction.

7. The electrode assembly of claim 6, wherein the fixing members are disposed to be spaced apart from each other at an equal interval.

8. The electrode assembly of claim 1, wherein each of the at least one fixing member comprises a porous structure.

9. The electrode assembly of claim 1, wherein each of the at least one fixing member is a tape in which an adhesive layer is formed on one surface of a substrate having a porous structure.

10. The electrode assembly of claim 1, wherein each of the at least one fixing member has a width of 10 mm to 50 mm.

11. A lithium secondary battery comprising:
the electrode assembly of any one of claims 1 to 10;
an electrolyte; and
a battery case in which the electrode assembly and the electrolyte are accommodated.

12. The lithium secondary battery of claim 11, wherein the battery case is a pouch-type battery case.
